(19) Europäisches Patentamt

European Patent Office

Office européen des brevets

(11) Veröffentlichungsnummer: **0 222 229 B1**

## EUROPÄISCHE PATENTSCHRIFT

(45) Veröffentlichungstag der Patentschrift: 03.07.91

(51) Int. Cl.⁵: **C09D 11/08**, C09F 1/04

(21) Anmeldenummer: 86114738.7

(22) Anmeldetag: 23.10.86

(54) **Wasserverdünnbares Druckfarbenbindemittelsystem und dessen Verwendung als Druckfarbe.**

(30) Priorität: 30.10.85 DE 3538549

(43) Veröffentlichungstag der Anmeldung:
20.05.87 Patentblatt 87/21

(45) Bekanntmachung des Hinweises auf die
Patenterteilung:
03.07.91 Patentblatt 91/27

(84) Benannte Vertragsstaaten:
AT BE CH DE ES FR GB IT LI NL SE

(56) Entgegenhaltungen:
EP-A- 0 002 854

(73) Patentinhaber: HOECHST AKTIENGESELL-
SCHAFT
Postfach 80 03 20
W-6230 Frankfurt am Main 80(DE)

(72) Erfinder: Rudolphy, Albert
Wilhelm-Kalle-Strasse 20
W-6200 Wiesbaden(DE)
Erfinder: Eckes, Helmut, Dr.
Feldbergblick 5
W-6239 Eppstein/Taunus(DE)

## Beschreibung

Zur Herstellung von Druckfarben wurden bisher in der Regel Systeme mit organischen Lösungsmitteln verwendet, die beispielsweise auch Bindemittel auf der Basis von Naturharzsäuren enthalten. Diese Systeme haben sich gut bewährt. Um jedoch eine Entlastung der Umwelt, insbesondere auch für das Personal in den Druckereien zu erreichen, war es erwünscht, Systeme zu entwickeln, die einen verringerten oder keinen Anteil an organischen Lösungsmitteln enthalten.

Im US-Patent 2 754 218 ist schon eine Druckfarbe auf der Basis eines Alkali- oder Erdalkali-Alkylarylsulfonats im Gemisch mit einem Pigment sowie Mineralöl und Wasser als Lösungsmittel beschrieben, wobei der Wasseranteil zwischen 5 und 50 % der Mischung liegen kann. Nachteilig ist der Mineralölanteil.

Aus dem US-Patent 3 361 582 ist eine Wasser und wenig Ammoniak enthaltende Druckfarbenmischung bekannt, die im wesentlichen auf Basis von sulfoniertem Rizinusöl, Kasein oder Dextrin und Formaldehyd aufgebaut ist. Hierbei dient der anwesende Formaldehyd als antibakterieller Zusatz für Kasein. Der Nachteil dieses Systems ist die erforderliche Vielzahl der verwendeten Komponenten bei der Herstellung.

Ferner ist eine wäßrige Druckfarbenmischung beschrieben, die neben Ruß dispergierte Stärke als Bindemittel und gegebenenfalls bis zu 5 % Mineralöl oder organische Lösungsmittel enthält (US-PS 4 310 356). Nachteilig ist, daß die Gegenwart von Stärke in wäßrigen Lösungen in vielen Fällen die Viskosität mit der Zeit beeinflußt, so daß vorzugsweise bei tiefen Temperaturen Gelierung eintritt. Man kann dies zwar durch chemische und/oder physikalische Modifikation der Stärke oder durch Zugabe von Viskositätsstabilisatoren in Form von Mineralsalzen vermindern, jedoch erfordert dies einen zusätzlichen Aufwand an Zeit und Material.

Die europäische Patentanmeldung 117 452 beinhaltet eine Druckfarbenmischung, die neben einem sulfatierten oder sulfonierten organischen Bindemittel, z.B. sulfonierte Tallölfettsäuren, die Viskosität steuernde Mittel, die auch als Co-Bindemittel wirken, z.B. Sojaprotein oder eine Vielzahl natürlicher und synthetischer wasserdispergierbarer polymerer Substanzen, sowie Antischaummittel und Wasser als Lösungsmittel enthält. Daneben kann eine Säure oder eine Base zur Einstellung des pH-Wertes verwendet werden. Auch in diesem Fall ist die Auswahl einer Vielzahl von Substanzen erforderlich, um die richtige Einstellung der Mischung zu erhalten.

Alle bekannten Systeme beschreiben jedoch Kombinationen, die von den Systemen gemäß der vorliegenden Erfindung abweichen.

Umsetzungsprodukte von Naturharzsäuren mit Formaldehyd sind aus der DE-PS 2 755 825 nur als Zwischenprodukte bekannt. Sie werden in weiteren Reaktionsschritten zu Bindemitteln für Druckfarben umgesetzt. Ihre alleinige Verwendung zur Herstellung von Druckfarben ist bisher nicht bekannt.

Die Umsetzung von Naturharzsäuren mit Formaldehyd in Gegenwart von Deshydratationskatalysatoren ist aus der FR-OS 2 255 332 bekannt. Ein Hinweis auf die Verwendung der erhaltenen Produkte in Druckfarben ist der Schrift jedoch nicht zu entnehmen.

Aufgabe der Erfindung ist es, mit relativ einfach herzustellenden Komponenten ein völlig blankes und stabiles wäßriges Druckfarbensystem zu Herstellung hochwertiger Druckfarben zu erhalten, ohne eine Vielzahl besonderer Zusätze zu verwenden.

Die vorliegende Erfindung überwindet die Nachteile der bekannten Druckfarbensysteme, indem sie ein Druckfarbenbindemittelsystem auf der Grundlage eines Naturharzsäure-Formaldehyd-Reaktionsproduktes in Form einer klaren, verdünnten, ammonikalischen oder aminhaltigen, wäßrigen Lösung vorsieht, wobei das Bindemittel ein durch Umsetzung in mindestens einer Stufe erhaltenes Reaktionsprodukt aus einer Naturharzsäure und Formaldehyd ist, die Formaldehydmenge (100 %ig) 1 bis 25 Gew.-% beträgt, bezogen auf die Naturharzsäure, und die Umsetzung in Abwesenheit oder in Gegenwart von 0,1 bis 2 Gew.-% eines Lewis-Katalysators unter atmosphärischem oder erhöhtem Druck vorgenommen worden ist.

Das Bindemittel enthält gegebenenfalls untergeordnete Mengen an ein- und/oder mehrwertigen Alkoholen wie Methanol, Isopropanol, vorzugsweise Äthanol oder auch Äthylenglykolmonoäthyläther.

Als Amine zur Herstellung der Harzlösung sind vor allem Aminoalkohole, beispielsweise Di- und Triethanolamin, Diisopropanolamin, Dimethylaminoethanol geeignet, wobei jedoch in der Regel Ammoniak vorzuziehen ist. Um unnötigen Ammoniakgeruch zu vermeiden, kann man das Reaktionsprodukt mit der geringstmöglichen Ammoniak-Konzentration auflösen oder aber man gibt zur nach Ammoniak riechenden Harzlösung Formaldehyd bis zur Geruchsfreiheit, d.h. zur Bildung von geruchslosem Hexamethylentetramin, das in Lösung bleibt und nicht stört, zu. Mit besonderem Vorteil wird das Naturharzsäure-Formaldehyd-Reaktionsprodukt in 3- bis 7 %iger Ammoniaklösung gelöst. Durch den Ammoniak werden auch etwaige Reste von freiem Formaldehyd in den Naturharz-Reaktionsprodukten zu geruchsneutralen Stoffen umgesetzt.

EP 0 222 229 B1

Das erfindungsgemäße System weist zweckmäßig einen pH-Wert von 7,5 bis 10, vorzugsweise 8 bis 10 auf. Durch Einhaltung dieses pH-Wertes wird die Bildung wasserlöslicher Salze begünstigt.

Geeignete Naturharzsäuren sind beispielsweise Kolophonium, insbesondere Balsamkolophonium, Wurzelharze, Tallharze, jeweils einzeln oder im Gemisch.

Die Herstellung der Naturharzsäure-Formaldehyd-Reaktionsprodukte kann auf verschiedene Weise vorgenommen werden. So können beispielsweise die gemäß der DE-PS 27 55 825 nach Stufe a) gewonnenen Produkte als Bindemittel eingesetzt werden. Hierbei werden Naturharzsäuren unter erhöhtem Druck und bei einer Temperatur von 100 bis 200 °C, vorzugsweise 120 bis 180 °C, mit 7,5 bis 12 Gewichtsprozent eines polymeren Formaldehyds, der z.B. in Form von Trioxan, vorzugsweise aber Paraformaldehyd eingesetzt werden kann, bezogen auf die Naturharzsäuren, umgesetzt.

Zweckmäßig wird hierbei unter einem Druck von 2 bis 10 bar, vorzugsweise 3 bis 6 bar, gearbeitet. In manchen Fällen kann jedoch bei einem Überdruck außerhalb dieses Bereiches gearbeitet werden.

Die nach diesem Verfahrensschritt hergestellten Reaktionsprodukte ergeben überraschenderweise bereits beim Lösen in verdünntem Ammoniak oder in einer aminhaltigen Lösung, die eine Temperatur von unter 50 °C hat, keine Gele, sondern blanke, mit Wasser weiter verdünnbare Firnisse. Unter "Wasser" werden in dieser Schrift Wasserqualitäten verstanden, die die Druckfarbenbindemittelsysteme nicht ungünstig beeinflussen, beispielsweise durch Trübung oder ähnlichem.

Das nach dieser Stufe erhaltene Umsetzungsprodukt kann aber auch nach Stufe b) des genannten Patents in zweiter Stufe weiter behandelt werden, wobei die Temperatur auf mindestens 200 °C, aber um mindestens 20 °C erhöht und unter atmosphärischem Druck bis zu einer Säurezahl von 115 bis 135 unter Teilveresterung umgesetzt wird. Die Teilveresterung in Stufen a) und b) wird durch Veresterung zwischen den COOH-Gruppen der Naturharzsäure und den bei der Umsetzung mit dem polymeren Formaldehyd entstehenden Methylolgruppen bewirkt und stellt eine intramolekulare Veresterung dar.

Die nach dieser Stufe z.B. bei Temperaturen von 200 bis 260 °C gewonnenen Reaktionsprodukte benötigen aber im Gegensatz zu den vorher beschriebenen, nach einstufigem Verfahren hergestellten Produkte jedoch einen untergeordneten Alkoholanteil, um blanke Firnisse mit hoher Weiterverdünnbarkeit mit Wasser zu erzielen.

Die Naturharzsäure-Formaldehyd-Reaktionsprodukte können aber auch einstufig unter atmosphärischem Druck hergestellt werden. In diesem Falle ist es jedoch zweckmäßig, in Gegenwart von Lewis-Säuren zu arbeiten, um eine ausreichende Umsetzung der Komponenten zu erzielen. Bei diesem Verfahren, das mit wäßrigem oder polymerem Formaldehyd durchgeführt wird, können gegebenenfalls hochsiedende Kohlenwasserstoffe wie Toluol, Xylol, Benzin oder dergleichen anwesend sein. Geeignete Lewis-Säuren sind beispielsweise Schwefelsäure, p-Toluolsulfonsäure, Borfluorid-Essigsäure, Zinkchlorid oder dergleichen. Reaktionsprodukte, die nach dieser Verfahrensart hergestellt worden sind, erfordern im allgemeinen die Gegenwart von unterschiedlichen Alkoholmengen, z.B. 2 bis 15 Gew.-%, bezogen auf die gesamte Firnislösung, zur Erzielung blanker Lösungen. Falls man ohne Lewis-Säuren, z.B. mit wäßrigem Formaldehyd arbeiten will, ist es in der Regel vorteilhaft, die in erster Stufe erhaltenen Reaktionsprodukte mit aliphatischen ungesättigten oder Hydroxylgruppen enthaltenden gesättigten Polycarbonsäuren wie Fumarsäure, Maleinsäure oder deren Anhydrid, Zitronensäure, Äpfelsäure oder Mischungen davon teilweise zu verestern, um eine ausreichende Löslichkeit im verdünnten Ammoniak bzw. der Aminlösung zu erzielen. In der Regel wird man aber unter erhöhtem Druck ohne Lewis-Säuren arbeiten und die dabei gewonnenen Reaktionsprodukte vorziehen, weil deren Herstellungsverfahren einfacher ist und die erhaltenen Lösungen keine Schwierigkeit bei der Verdünnung mit Wasser bereiten.

Bei der Herstellung der unveresterten Naturharzsäure-Formaldehyd-Reaktionsprodukte ist in der Regel zu beachten daß ein genügend hoher Anteil an Formaldehyd umgesetzt wird. Der bevorzugte Bereich beim Arbeiten unter erhöhtem Druck beträgt 4 bis 18, insbesondere 9 bis 14 Gew.-%, Formaldehyd (100 %ig), bezogen auf Naturharz. Bei der Reaktion unter Normaldruck kann man auch den Formaldehydanteil bis zu 25 Gew.-% erhöhen, weil bei der Reaktion Verluste an Formaldehyd eintreten können. Es hat sich nämlich gezeigt, daß ein zu geringer Anteil an Formaldehyd nicht in jedem Fall die gewünschten optimalen Lösungseigenschaften ergibt. Bei einem Anteil von weniger als 4 Gew.-% kann beispielsweise der Zusatz großer Mengen an ein- und/oder mehrwertigen Alkoholen erforderlich sein, um blanke Lösungen zu erhalten.

In manchen Fällen, wie bereits erwähnt, kann es zweckmäßig sein, dem System zusätzlich einen untergeordneten Anteil, bezogen auf die Gesamtlösung, an ein- und oder mehrwertigen Alkoholen als Co-Lösungsmittel zuzusetzen. Geeignete Alkohole sind beispielsweise Glykole, Polyglykole, die allerdings die Trocknung der Firnisse oder der Farben verzögern, vor allem aber niedere einwertige Alkohole wie die bereits genannten. Der Alkoholgehalt kann je nach Art des Naturharzsäure-Formaldehyd Reaktionsproduktes variieren. Zweckmäßig soll er so gering wie möglich sein, d.h. nicht höher als 30, vorzugsweise nicht höher

3

als 25 Gew.-%, bezogen auf die Gesamtlösung.

Geht man von Tallharzen anstelle von Balsamkolophonium bei der Herstellung der Naturharzsäure-Formaldehyd-Reaktonsprodukte aus, so benötigen die erhaltenen Produkte häufig geringe Zusätze an ein- und/oder mehrwertigen Alkoholen, vorzugsweise Ethylalkohol, zur Herstellung blanker Firnisse. Dies ist durch den höheren Gehalt an unverseifbaren Anteilen im Tallharz bedingt.

Gegenstand der Erfindung sind daher auch Verfahren zur Herstellung der erfindungsgemäßen Druckfarbenbindemittelsysteme.

Ein weiterer Gegenstand der Erfindung sind Druckfarbenbindemittelsysteme, in denen das Bindemittel ein Naturharz-Formaldehyd-Reaktionsprodukt ist, das mit mindestens einer Polycarbonsäureeinheit der Gruppe a) einer äthylenisch ungesätigen Dicarbonsäure und/oder deren Anhydrid und b) einer Hydroxycarbonsäure teilverestert ist. Als Dicarbonsäuren kommen vor allem Maleinsäure und/oder deren Anhydrid und Fumarsäure in Frage. Geeignete Hydroxycarbonsäuren sind beispielsweise Milchsäure, Äpfelsäure, Zitronensäure oder dergleichen. Der Anteil der Dicarbonsäuren beträgt zweckmäßig 3 bis 25, vorzugsweise 5 bis 15 Gew.-%, derjenige der Hydroxycarbonsäuren 5 bis 30, vorzugsweise 10 bis 20 Gew.-%, jeweils bezogen auf das Naturharzsäure-Formaldehyd-Reaktionsprodukt. Die Umsetzung mit der Dicarbonsäureeinheit wird im allgemeinen bei 160 bis 260 °C vorgenommen, während für die Umsetzung mit Hydroxycarbonsäuren gewöhnlich Temperaturen zwischen 140 und 240, vorzugsweise 160 bis 240 °C gewählt werden.

Die Teilveresterung mit Polycarbonsäuren bringt den Vorteil mit sich, daß auf diese Weise die Eigenschaften des Bindemittelsystems beeinflußt werden können. So ist es z.B. möglich, höher schmelzende und höher viskose Produkte mit erhöhter Polarität herzustellen, die eine rasche Trocknung oder eine erhöhte Löslichkeit aufweisen.

Obwohl die mit Polycarbonsäuren erhaltenen Teilester ein höheres Molekulargewicht besitzen und polarer als das unveresterte Reaktionsprodukt sind, lösen sie sich noch gut in den verdünnten aminhaltigen, vorzugsweise ammoniakalischen Lösungen auf. Blanke Lösungen, auch bei weiterer Verdünnung, werden bei Teilestern mit Maleinsäure bzw. Maleinsäureanhydrid ohne Alkoholzusätze erhalten. Dagegen ist es zweckmäßig, mit den Teilestern von Fumarsäure oder den Hydroxycarbonsäuren durch geringen Zusatz von Alkohol, z.B. Ethanol, eine Weiterverdünnung zu blanken Lösungen zu erzielen. Durch die Teilveresterung mit Polycarbonsäuren werden genügend Carboxylgruppen in die Naturharzsäure-Formaldehyd-Reaktionsprodukte eingeführt, die die Säurezahl erhöhen und eine ausreichende Löslichkeit in den aminhaltigen bzw. ammoniakalischen Lösungen bewirken. Bei dieser Modifikation der Reaktionsprodukte kann man den Anteil an Formaldehyd sehr niedrig halten, beispielsweise genügen mindestens 2 Gew.-% Formaldehyd, um zu brauchbaren Firnissen zu gelangen. Dies ist überraschend, da eigene Versuche gezeigt haben, daß Firnisse, die mit Anlagerungsprodukten aus unmodifizierten Naturarzsäuren und den genanntne Polycarbonsäuren, also ohne Formaldehyd-Komponente hergestellt worden sind, ein ungünstiges Lösungsverhalten besitzen. Man kann bei diesen Proben zwar durch Ethanolzusatz bei 80 °C blanke Firnisse erzielen, doch gelieren diese Proben beim Abkühlen auf 25 °c. Derartige Produkte können als Bindemittel in mit Wasser verdünnbaren Druckfarbenbindemittelsystemen nicht eingesetzt werden.

Zur Viskositätserniedrigung kann man dem Druckfarbenbindemittelsystem, vor allem, wenn es in Verbindung mit Ruß oder Pigmenten vorliegt, erfindungsgemäß zusätzlich Zucker und/ oder Harnstoff und/oder Tripolynhosphat in einem Anteil von bis zu 50, vorzugsweise bis zu 30 Gew.-%, bezogen auf den Gesamtfestkörpergehalt, zusetzen.

Gegenstand der Erfindung ist auch die Verwendung der erfindungsgemäßen Bindemittelsysteme als Druckfirnis, insbesondere für den Buch- und Offsetdruck, oder in Kombination mit Ruß oder Buntpigmenten als Druckfarben, insbesondere für den Flexodruck. Der Anteil der Pigmentzusätze kann bis zu 50, vorzugsweise 5 Bis 20 Gew.-%, bezogen auf das Bindemittel, betragen. Die Druckfarben können ferner weitere übliche Zusätze, wie Druckhilfsmittel, Extender und Antischaummittel oder dergleichen enthalten. Die vorliegende Erfindung beeinhaltet nicht nur ein umweltfreundliches System ohne Mineralöl, sondern darüber hinaus werden damit Firnisse und Druckfarben erhalten, die überraschend schnell trocknen und eine gute Haftung auf Folien, Pappen, Karton, Natur- und Zeitungspapieren, einen hohen Glanz sowie eine hohe Abriebfestigkeit aufweisen. Ein weiterer Vorteil der erfindungsgemäßen pigmentierten Druckfarben ist die Tatsache, daß sie direkt nach ihrem Aufbringen, auch auf saugende Unterlagen, z.B. Zeitungspapier, nicht durchschlagen und daß ihre Abriebfestigkeit höher ist als die von herkömmlichen, mit Mineralölen hergestellten Druckfarben, wie sie im allgemeinen noch überwiegend im Zeitungsdruck verwendet werden.

In den folgenden Beispielen sind T jeweils Gewichtsteile und % jeweils Gewichtsprozent. Die Viskositätsangaben beziehen sich stets auf 66,6 %ige Toluollösungen bei 20 °C. wenn nicht anders angegeben. Die Schmelzpunkte (Fp) wurden jeweils nach der Kapillarmethode ermittelt.

Beispiele

4

1 und 2 - I) Herstellung der Naturharzsäure-Formaldehyd-Reaktionsprodukte

1a) 1000 T portugiesisches Kolophonium (Fp 65°C, SZ 165) wurde geschmolzen und dem 100 bis 120°C warmen Ansatz 95 T Paraformaldehyd zugegeben. Das Gemisch wurde bei 3,5 bar in 300 min bei 160°C umgesetzt. Ausbeute 1090 T, Fp 72°C, Säurezahl 145, Viskosität 950 mPa.s.

2a) Ein Teil des nach Beispiel 1 a) erhaltenen Produkts wurde in aufeinanderfolgenden Stufen jeweils 60 min auf 180, 230 und 230°C erhitzt. Kennzahlen des erhaltenen Produktes: Fp 83°C, Säurezahl 128, Viskosität (66,7 % in Toluol) 480 mPa.s.

II) Herstellung des wasserverdünnbaren Systems

Mit den Reaktionsprodukten 1a) und 2a) wurde jeweils ein Firnis mit folgenden Bestandteilen hergestellt.

## Tabelle I

| Firnis | 1b) | 2b) |
|---|---|---|
| Wasser/T | 290 | 290 |
| Ammoniak 25 %ig/T | 60 | 60 |
| Gepulverte Probe 1a)/T | 150 | - |
| Gepulverte Probe 2a)/T | - | 150 |
| Aussehen bei 50°C | blank | trüb |
| Zusatz an Ethylalkohol/T | - | 80 |
| Aussehen nach Abkühlen auf 25°C | blank | blank |
| Viskosität/mPa.s | 2300 | 150 |
| Verdünnbarkeit 1 T Firnis : T Wasser | 1 : 10 | 1 : 2 |

Wie der Vergleich des Lösungsverhaltens zeigt, läßt sich die Probe 1a) mit Wasser verdünnen, ohne daß Alkoholzusatz erforderlich ist. Dagegen wird Probe 2a) erst nach Alkoholzusatz bei 50°C blank und bleibt bei Raumtemperatur blank. Bei weiterer Verdünnung über ein Verhältnis Firnis : Wasser von 1 : 2 hinaus ist aber weiterer Alkoholzusatz erforderlich. Beide Proben ergeben jedoch Firnisse mit guten Lösungseigenschaften.

Die Firnisse 1b) und 2b) wurden mittels einer Drahtspirale in einer Naßschicht von 6 μm Stärke auf eine Polyvinylchlorid(PVC)-Folie aufgezogen. Innerhalb von 60 Sekunden waren die Schichten trocken. Außerdem wurde der Glanz nach Lange (60°) nach dem Auftragen einer 6 μm starken Naßschicht auf mit schwarzer Farbe bedruckte Erichsen-Prüfkarten [Prüfkarte zur Bestimmung des Deckvermögens Typ 24/5 Erichsen; Lieferant: Erichsen GmbH u. Co. KG, D-5870 Hemer-Sundwig] gemessen. Er ergab eine Steigerung von 81,9 auf 93,6 = 14 %. Die Haftung und Abriebfestigkeit waren sowohl auf Folien als auch auf dem Prüfkarton überraschend gut.

III. Herstellung der Druckfarbe

67 T eines 30 %igen Firnisses 1b) wurden mit 15 T Wasser und 18 T Ruß (= 90 Gew.-%, bezogen auf Festkörper) pigmentiert. Nach 3 Tagen Lagerung wurde die Farbe aufgezogen.

Die 6 μm Naßschicht war in 70 Sekunden trocken und zeigte eine gute Haftung. Nach Aufzug einer Schicht mittels eines Glasstabes auf Zeitungspapier war die Schicht sofort trocken, ohne durchzuschlagen. Selbst 36 μm Naßschichten blieben ohne Durchschlageffekt.

3 bis 6 - I. Herstellung der Naturharzsäure-Formaldehyd-Reaktionsprodukte

In Beispielen 3a) bis 5a) wurden verschiedene Tallharze und in Beispiel 6a) ein Balsamkolophonium entsprechend Beispiel 1) jeweils 3 Stunden bei 160° C unter Druck im Verhältnis 1000 T Naturharz : 100 T Paraformaldehyd umgesetzt. Die Kennzahlen der Ausgangsharze und der Reaktionsprodukte sind Tabelle II zu entnehmen:

## Tabelle II

| Beispiel | 3a) | 4a) | 5a) | 6a) |
|---|---|---|---|---|
| Kennzahlen der Ausgangsharze | | | | |
| Schmelzpunkt/°C | 50 | 55 | 57 | 62 |
| Säurezahl | 169 | 172 | 160 | 167 |
| Jodzahl/Wijs | 200 | 150 | 160 | 270 |
| Viskosität/mPa.s | 54 | 74 | 61 | 44 |
| Schmelzpunkt/Kapillare/°C | 56 | 77 | 70 | 72 |
| Säurezahl | 141 | 139 | 135 | 147 |
| Viskosität/mPa.s | 254 | 287 | 267 | 960 |
| Gehalt an freiem $CH_2O$/% Sulfitmethode nach Wasserdampfdestillation | 0,9 | 1,4 | 1,92 | 0,36 |
| OH-Zahl | 94 | 76 | 78 | 133 |

II) Herstellung des wasserverdünnbaren Systems

Aus den Proben 3a) bis 6a) wurden jeweils Firnisse nachstehender Zusammensetzung hergestellt. Außerdem zeigt die Tabelle III deren Lösungsverhalten und drucktechnische Eigenschaften.

## Tabelle III

| Firnis | 3b) | 4b) | 5b) | 6b) |
|---|---|---|---|---|
| Wasser/T | 290 | 290 | 290 | 290 |
| Ammoniak, 25 %ig/T | 60 | 60 | 60 | 60 |
| Harzpulver 3a)/T | 150 | - | - | - |
| 4a) | - | 150 | - | - |
| 5a) | - | - | 150 | - |
| 6a) | - | - | - | 150 |
| Ethylalkohol/T | 60 | 60 | 70 | - |
| Blanker Firnis bei Raum-temperatur | + | + | + | + |
| Viskosität n. Ubbelohde/mPa.s | 178 | 407 | 327 | 640 |
| pH-Wert des Firnis | 9,2 | 9,3 | 9,3 | 9,2 |
| Verträglichkeit m. elektro-lytfreiem Wasser | 1:1 | 1:0,5 | 1:0,5 | 1:beliebig |
| Trocknung 6 µm Naßschicht auf PVC-Folie/s | 80 | 80 | 85 | 75 |
| Glanzsteigerung auf Erichsen-Prüfkarten nach LANGE/60° in % | 11 | 8 | 9 | 9,5 |

Wie sich aus Tabelle III ergibt, sind für die Reaktionsprodukte 3b) bis 5b) mit unterschiedlicher OH-Zahl unterschiedliche Mengen an Alkoholzusatz erforderlich, um blanke und weiterverdünnbare Firnisse zu erhalten. Dies ist dadurch bedingt, daß Naturharzsäuren mit niedrigen Jodzahlen unten gleichen Bedingungen geringere Mengen an Formaldehyd anlagern als Balsamkolophonium. Demgegenüber benötigt Probe 6b) aus Balsamkolophonium keinen Alkoholzusatz. Ferner zeigt die Tabelle III, daß die Proben 3b) bis 6b) in ihren Eigenschaften mit den Proben 1b) und 2b) vergleichbar sind.

7 bis 12 - I. Herstellung der Naturharzsäure-Formaldehyd-Reaktionsprodukte

In den folgenden Beispielen ist Probe 7a) unverestert, hingegen sind die Proben 8a) bis 12a) mit Polycarbonsäuren teilverestert.

7a) 10000 T des in Beispiel 3a) eingesetzten Tallharzes und 900 T Paraformaldehyd wurden 3 Stunden bei 155° C und 5 bar Maximaldruck erhitzt.
Ausbeute 10870 T, Fp 56° C, Säurezahl 141, Viskosität 200 mPa.s.
8a) 1000 T des Anlagerungsprodukts 7a) wurden bei 150° C mit 150 T Maleinsäureanhydrid versetzt und in aufeinanderfolgenden Stufen jeweils 60 Minuten bei 160° C, 200° C und 250° C gehalten.
Ausbeute 1095 T, Fp 98° C, Säurezahl 176, Viskosität 2710 mPa.s.
9a) Es wurde gearbeitet wie nach Beispiel 8a), jedoch mit 150 T Fumarsäure anstelle von Maleinsäureanhydrid. Ausbeute 1047 T, Fp 93° C, Säurezahl 167, Viskosität 1273 mPa.s.
10a) Es wurde gearbeitet wie nach Beispiel 8a), mit dem Unterschied, daß 250 T Zitronensäure zugegeben wurden. Ausbeute 1053 T, Fp 70° C, Säurezahl 164, Viskosität 234 mPa.s.
11a) 1000 T eines durch 4 Stunden Druckreaktion von 1000 T des in Beispiel 3a) eingesetzten Tallharzes mit 100 T Paraformaldehyd bei 170° C hergestellten Anlagerungsproduktes mit Schmelzpunkt 56° C, Säurezahl 151 und Viskosität von 254 mPa.s wurden mit 50 T Maleinsäureanhydrid und 150 T Zitronensäure wie nach Beispiel 8a) behandelt. Ausbeute 1071 T, Fp 82° C, Säurezahl 167, Viskosität 420 mPa.s.

12a) 1000 T Kolophonium-Formaldehyd-Reaktionsprodukt nach Beispiel 6a) wurden mit 150 T Zitronensäure und 50 T Maleinsäureanhydrid wie im Beispiel 11a) behandelt. Ausbeute 1078 T, Fp 110°C, Säurezahl 172, Viskosität 3560 mPa.s. Das so erhaltene Bindemittel ist wesentlich höherschmelzend und besitzt eine höhere Viskosität als die in gleicher Weise modifizierte Probe aus Tallharz vom Beispiel 11a).

II. Herstellung des wasserverdünnbaren Systems

Die Tabelle IV zeigt die Zusammensetzung, das lösungs- und drucktechnische Verhalten der aus Proben der Beispiele 7a) bis 12a) hergestellten Firnisse.

## Tabelle IV

| Firnis | 7b) | 8b) | 9b) | 10b) | 11b) | 12b) |
|---|---|---|---|---|---|---|
| Wasser/T | 290 | 290 | 290 | 290 | 290 | 290 |
| Ammoniak, 25 %ig/T | 60 | 60 | 60 | 60 | 60 | 60 |
| gepulvertes Harz 7a)/T | 150 | | | | | |
| 8a) | | 150 | | | | |
| 9a) | | | 150 | | | |
| 10a) | | | | 150 | | |
| 11a) | | | | | 150 | |
| 12a) | | | | | | 150 |
| Ethylalkohol/T | 60 | 0 | 0 | 60 | 0 | 0 |
| bei Raumtemperatur, blank | + | + | + | + | + | + |
| Viskosität n. Ubbelohde 20°C/mPa.s | 150 | 783 | 2600 | 160 | 3060 | 6350 |
| Verträglichkeit m. elektrolytfr. $H_2O$ | 1:1 | 1:3 | 1:2 | 1:2 | 1:0,5 | 1:1 |
| Trocknung 6 um-Aufzüge auf Folie | 85 | 66 | 60 | 60 | 70 | 60 |
| Prozentuale Glanzsteigerung in % durch 6-um-Naßschicht-Aufzüge auf Erichsen-Prüfkarten | 10 | 9,6 | 8,4 | 10 | 9,1 | 8,9 |

Wie die vorstehenden Ergebnisse zeigen, werden nach Teilveresterung mit den ungesättigten Dicarbonsäuren oder Oxycarbonsäuren auch die Tallharz- oder Kolophonium-Formaldehyd-Reaktionsprodukte zu Teilestern mit günstigem Lösungsverhalten umgewandelt. Man erhält also völlig wasserverträgliche Firnisse oder solche, die mit geringerem Alkoholzusatz ausreichend wasserverträglich werden, um sie für eine technische Verwendung interessant zu machen.

III. Herstellung der Druckfarben

Zu den wäßrigen Druckfirnissen wurden 90 Gew.-% Ruß, bezogen auf deren Festkörpergehalt, gegeben. Das Gemisch wurde in Kugelmühlen zu einer Korngröße von unter 4 $\mu$m dispergiert. Die Schwarzfarben behielten, als 6-$\mu$m-Naßschicht auf Folien aufgezogen, dieselbe rasche Trocknung wie die 6-$\mu$m-Firnisnaßschicht. Beim Aufbringen der Farben mit einem Glasstab oder als 36-$\mu$m-Naßschicht auf Zeitungspapier zeigte sich kein Durchschlagen. Abriebfestigkeit und Haftung sind gut.

13 bis 18 - I. Herstellung der Naturharzsäure-Formaldehyd-Reaktionsprodukte

Die nachstehenden Beispiele arbeiten mit Naturharzsäure-Reaktionsprodukten, die unter Normaldruck mit oder ohne Lewis-Säuren hergestellt wurden.

13a) 1000 T Kolophonium wurden in einem Reaktionsgefäß mit angebrachtem Wasserabscheider bei 130°C mit 100 T Xylol und 20 T einer 20 %eigen Zinkchloridlösung versetzt und zu dem Gemisch anschließend bei 100°C 600 T 37 %iger Formaldehyd innerhalb 10 min zugegeben. In 90 min wurde eine Guttemperatur von 110°C erhalten und das Gemisch 4 Stunden bei dieser Temperatur gehalten. Unter Abzug von Wasser wurden innerhalb von 60 min 160°C erreicht.

Ausbeute 1080 T, Fp 82°C, Säurezahl 152, Viskosität 485 mPa.s.

14a) 1000 T portugiesisches Kolophonium wurden geschmolzen und 20 T 25 %ige Zinkchloridlösung zugegeben. Bei 100°C erfolgte innerhalb von 10 min Zugabe von 160 T Paraformaldehyd. Das Gemisch wurde auf 120°C erhitzt, 30 min bei dieser Temperatur gehalten und anschließend weitere 100 min auf 140°C erhitzt.

Ausbeute 1083 T, Fp 89°C, Säurezahl 151, Viskosität 650 mPa.s.

15a) 900 T chinesisches Kolophonium und 100 T des in Beispiel 3b) eingesetzten Tallharzes wurden geschmolzen, 100 T Xylol zugesetzt und bei 100°C 20 T 25 %ige Zinkchloridlösung und 100 T Paraformaldehyd zugegeben. Innerhalb von 30 min wurde auf 110°C, dann 30 min auf 120°C erhitzt und das Gemisch 2 Stunden bei dieser Temperatur gehalten. Dann wurden 150 T Maleinsäureanhydrid zugesetzt, auf 200°C erhitzt und das Gemisch 60 min bei 240°C gehalten. Ausbeute 1095 T, Fp 96°C, Säurezahl 166, Viskosität 485 mPa.s.

16a) Es wurde wie nach Beispiel 15a) gearbeitet, mit dem Unterschied, daß anstatt 100 T Paraformaldehyd 160 T Paraformadehyd eingesetzt wurden.

Ausbeute 1113 T, Fp 85°C, Säurezahl 156, Viskosität 660 mPa.s.

17a) Es wurde wie nach Beispiel 16a) gearbeitet, jedoch mit 150 T Fumarsäure anstelle von Maleinsäureanhydrid. Ausbeute 1091 T, Fp 107°C, Säurezahl 165, Viskosität 1700 mPa.s.

18a) 1000 T amerikanisches Wurzelharz wurden geschmolzen und 100 T Xylol, 20 T 25 %ige Zinychloridlösung und bei 100°C 160 T Paraformaldehyd zugegeben. Das Gemisch wurde jeweils 60 bin bei 110°C und 120 min bei 120°C gehalten, anschließend 50 T Maleinsäureanhydrid zugegeben und im Laufe von 180 min auf 170°C erhitzt und anschließend entleert. Ausbeute 1115 T, Fp 109°C, Säurezahl 162, Viskosität 1725 mPa.s.

II. Herstellung des wasserverdünnbaren Systems

Aus den Reaktionsprodukten 13a) bis 18a) wurden jeweils Firnisse mit folgenden Bestandteilen hergestellt, deren lösungs- und drucktechnisches Verhalten aus Tabelle V ersichtlich sind.

EP 0 222 229 B1

## Tabelle V

| Firnis | 13b) | 14b) | 15b) | 16b) | 17b) | 18b) |
|---|---|---|---|---|---|---|
| Wasser/T | 290 | 290 | 290 | 290 | 290 | 290 |
| Ammoniak, 25 %ig/T | 60 | 60 | 60 | 60 | 60 | 60 |
| Harzpulver aus Bsp. 13a)/T | 150 | | | | | |
| 14a) | | 150 | | | | |
| 15a) | | | 150 | | | |
| 16a) | | | | 150 | | |
| 17a) | | | | | 150 | |
| 18a) | | | | | | 150 |
| Ethylalkohol/T | 90 | 30 | 80 | - | - | 20 |
| blanker Firnis bei Raumtemperatur | + | + | + | + | + | + |
| Abscheidungen enthaltend | - | - | + | - | - | - |
| Viskosität 20°C/mPa.s | 72 | 965 | - | 2600 | 5500 | 2210 |
| Verträglichkeit m. elektrolytfreiem Wasser | 1:1,5 | 1:2 | - | 1:4 | 1:2 | 1:1 |
| Trocknung 6 µm Naßschicht auf PVC-Folie/S | 70 | 95 | - | 75 | 60 | 65 |
| Glanzsteigerung auf Erichsen-Prüfkarten nach LANGE/60° in % | - | 11,5 | - | 10,2 | 8,7 | 9,5 |

Wie Tabelle V zeigt, ergeben auch mit Lewis-Säuren hergestellte Naturharz-Formaldehyd-Reaktionsprodukte Firnisse mit günstigem Lösungsverhalten sowie günstigen drucktechnischen Eigenschaften. Probe 15b) zeigt bei einem relativ niederen Anteil an Paraformaldehyd einen bei Raumtemperatur blanken Firnis, auch wenn nicht ganz optimale Eigenschaften erzielt werden. Probe 13a) zeigt, daß man auch mit wäßrigem Formaldehyd, jedoch unter Zusatz einer erhöhten Menge an Alkohol eine Verträglichkeit mit Wasser erreichen kann. Hingegen benötigen die Probe 16a und 17b) keinen Alkoholzusatz.

Ein Vergleich der Werte der Tabelle V mit denen der Tabelle IV, deren Reaktionsprodukte unter Druck hergestellt worden sind, ergibt, daß die Firnisse der Tabelle IV generell weniger Alkoholzusatz benötigen als die mit Lewis-Säuren hergestellten Proben 13b) bis 18b).

III. Herstellung der Druckfarben

Es wurden 90 Gew.-% Ruß, bezogen auf den Festkörper der Firnisse, sowie solche Anteile an Wasser zugegeben, daß folgende Mengenverhältnisse erhalten wurden: 18 T Ruß, 82 T Firnis, alkoholfrei oder alkoholhaltig. Diese Gemische wurden in einer Kugelmühle dispergiert. Nach 48 Stunden Lagerung wurden die Schwarzfarben zu einer 6-µm-Naßschicht auf PVC-Folien aufgezogen. Sie trockneten ähnlich rasch wie die Ausgangsfirnisse. Auf Zeitungspapier mittels eines Glasstabes aufgezogen trat sofortige Trocknung ein, ohne Durchschlagen der Farbe in die Papierrückseite. Auch 36-µm-Naßschichten, auf die gleiche Papiersorte aufgebracht, ergaben kein Durchschlagen.

19 bis 22 - I. Herstellung der Naturharzsäure-Formaldehyd-Reaktionsprodukte

Beispiele 19a) bis 22a) bzw. 19b) bis 22b) zeigen, daß man auch mit geringen Mengen an Paraformaldehyd Systeme erhalten kann, die in verdünntem Ammoniak löslich sind. Wichtig ist hierbei ein bestimmter Anteil an Esterbindungen, wie er in vorliegenden Beispielen mit Maleinsäureanhydrid erreicht wird.

19a) 1000 T Tallharz wurden in 100 T Xylol gelöst. Nach Zugabe von 20 T einer 25 %igen Zinkchloridlösung wurden 20 T Paraformaldehyd zugesetzt und das Gemisch jeweils 3 Stunden auf 100 bis 120°G und 2 Stunden auf 140 bis 160°C erhitzt. Nach Zugabe von 100 T Maleinsäureanhydrid

10

wurde das Gemisch in zweiter Stufe eine Stunde bei einer Temperatur von 200° C teilverestert.

Ausbeute 1087 T, Fp 71° C, Säurezahl 186, Viskosität 189 mPa.s.

20a) Es wurde wie nach Beispiel 19a) gearbeitet mit dem Unterschied, daß nunmehr 40 T Paraformaldehyd umgesetzt wurden.

Ausbeute 1112 T, Fp 79° G, Säurezahl 186, Viskosität 331 mPa.s.

21a) Es wurde wie nach Beispiel 19a) gearbeitet mit dem Unterschied, daß nunmehr 60 T Paraformaldehyd umgesetzt wurden.

Ausbeute 1121 T, Fp 83° C, Säurezahl 185, Viskosität 415 mPa.s.

22a) Es wurde wie nach Beispiel 18a) gearbeitet mit dem Unterschied, daß nunmehr 80 T Paraformaldehyd umgesetzt wurden.

Ausbeute 1131 T, Fp 83° C, Säurezahl 184, Viskosität 486 mPa.s.

II. Herstellung des wasserverdünnbaren Systems.

Aus den Proben 19a) bis 22a) wurden Firnisse nachstehender Zusammensetzung mit den in Tabelle VI angegebenen lösungs- und drucktechnischen Eigenschaften hergestellt.

## Tabelle VI

| Firnis | 19b) | 20b) | 21b) | 22b) |
|---|---|---|---|---|
| Wasser/T | 290 | 290 | 290 | 290 |
| Ammoniak, 25 %ig/T | 60 | 60 | 60 | 60 |
| Harzpulver aus Bsp. 19a)/T | 150 | – | – | – |
| 20a) | – | 150 | – | – |
| 21a) | – | – | 150 | – |
| 22a) | – | – | – | 150 |
| Nach 1 h/60°C alle Harzanteile gelöst | + | + | + | + |
| Wasserverdünnbarkeit des Firnis | 1:0,4 | 1:0,5 | 1:0,6 | 1:0,8 |
| Zusatz von Ethylalkohol/T | 80 | 80 | 80 | 80 |
| Wasserverdünnbarkeit des alkohol-haltigen Firnis | 1:6 | ∞ | ∞ | ∞ |
| Trocknung 6-µm-Naßschicht/Folie/s | 80 | 75 | 75 | 70 |

Wie Tabelle VI zeigt, lösen sich die Proben zwar in unverdünntem Ammoniak, doch liegt die Wasserverdünnbarkeit nur im Bereich von 1 : 0,4 bis 1 : 0,8. Erst nach Zusatz von Alkohol werden mit Wasser weiterverdünnbare Firnisse erhalten, die niedrigviskos sind und rasch trocknen. Außerdem zeigt Tabelle VI, daß Paraformaldehydanteile von nur 2 % zu Firnissen mit überraschend guten Eigenschaften führt.

III. Herstellung der Druckfarben

Aus 18 T Ruß, 67 T der Firnisproben 19b) bis 22b) und 15 T Wasser wurden Druckfarben mit einer Auslaufzeit (4 mm-DIN 53211-Becher) von 15 bis 16,5 s hergestellt. Die drucktechnischen Eigenschaften sind aus Tabelle VII ersichtlich.

## Tabelle VII

| Druckfarbe aus Firnis | 19b) | 20b) | 21b) | 22b) |
|---|---|---|---|---|
| Trocknung 6-µm-Naßschicht auf PVC-Folie/s | 85 | 60 | 60 | 55 |
| Glanz auf Erichsen-Prüfkarten nach Lange/60° in % | 6,7 | 12,1 | 18,6 | 26,4 |
| Mit Glasstab auf Zeitungspapier aufgezogene Schicht, Glanz nach Lange/60° in % | 3 | 4,1 | 3,9 | 3,9 |

Wie sich aus der Tabelle ergibt, nimmt auf PVC-Folie die Trockengeschwindigkeit und auf Prüfkarten der Glanz mit steigendem Formaldehydgehalt zu. Auch auf Zeitungspapier zeigen die Proben mit höherem Formaldehydgehalt Vorteile gegenüber der Probe mit dem geringsten Formaldehydanteil. Alle diese Beispiele zeichnen sich durch überraschend hohen Glanz aus.

23 bis 25 - I. Herstellung der Naturharzsäure-Formaldehyd-Reaktionsprodukte

Beispiele 23a) bis 25a) gehen von Natuarzsäure-Formaldehyd-Reaktionsprodukten aus, die durch Anlagerung wäßriger Formaldehydlösungen ohne Katalysatoren unter Normaldruck hergestellt worden sind.
23a) 750 T Balsamkolophonium 75 T Xyol und 450 T 37 %iger Formaldehyd wurden 4 Stunden auf 110° C erhitzt. Durch Wasserabzug wurde die Guttemperatur in 60 min auf 140° G erhöht, in weiteren 60 min auf 160° C. Dann wurden 187,5 T Zitronensäure zugegeben und das Gemisch 2 Stunden bei 200° C gehalten.
Ausbeute 865 T, Fp 84° C, Säurezahl 181, Viskosität 407 mPa.s.
24a) Es wurde wie nach Beispiel 23a) gearbeitet, jedoch wurden statt der Zitronensäure 112,5 T Maleinsäureanhydrid umgesetzt.
Ausbeute 890 T, Fp 112° C, Säurezahl 187, Viskosität 5000 mPa.s.
25a) Es wurde wie nach Beispiel 23a) gearbeitet, jedoch wurden statt der Zitronensäure 112,5 T Fumarsäure umgesetzt.
Ausbeute 873 T, Fp 139° C, Säurezahl 184, Viskosität 20000 mPa.s.

II. Herstellung des wasserverdünnbaren Systems

Aus den Proben 23a) bis 25a) wurden Firnisse der in Tabelle VIII aufgeführten Zusammensetzung hergestellt. Tabelle VIII zeigt außerdem die lösungs- und drucktechnischen Eigenschaften dieser Firnisse.

## Tabelle VIII

| Firnis | 23b) | 24b) | 25b) |
|---|---|---|---|
| Wasser/T | 290 | 290 | 290 |
| Ammoniak, 25 %ig/T | 60 | 60 | 60 |
| Harzpulver aus Bsp. 23a)/T | 150 | – | – |
| 24a) | – | 150 | – |
| 25a) | – | – | 150 |

| Firnis blank bei Raumtemperatur | + | + | + |
|---|---|---|---|
| Verträglichkeit mit Wasser | 1:0,5 | 1:1 | 1:1 |
| Zusatz von Ethylalkohol/T | 30 | - | - |
| Viskosität in mPa.s | 187 | 225 | 19500 |
| Trocknung 6-μm-Naßschicht auf Folie/s | 75 | 70 | 125 |

26 bis 29 - I. Herstellung der Naturharzsäure-Formaldehyd-Reaktionsprodukte

26a) bis 28a) (zweistufiges Verfahren). Aus 1000 T portugiesischem Balsamkolophonium und 105 T Paraformaldehyd wurde in erster Stufe bei 150° C in 300 min unter Druckreaktion ein Formaldehyd-Kolophonium-Reaktionsprodukt mit folgenden Kennzahlen erhalten:
Fp 73° C, Säurezahl 148, Viskosität 830 mPa.s. 1000 T dieses Anlagerungsprodukts wurden mit 250 T Zitronensäure in 60 min auf 220° C erhitzt und 180 min bei 220° C gehalten.
Ausbeute 1068 T, Fp 102° C, Säurezahl 177, Viskosität 1290 mPa.s.
Das erhaltene Produkt wurde als Bindemittel für die Firnisse 26b) bis 28b) eingesetzt.
29a) 1000 T des in erster Stufe gemäß Beispiel 26a) hergestellten Kolophonium-Formadehyd-Reaktionsprodukts wurden 4 Stunden bei 180° C mit 244 T Äpfelsäure umgesetzt. Ausbeute 1148 T, Fp 133° C, Säurezahl 212

II. Herstellung des wasserverdünnbaren Systems

Aus der mit Zitronensäure modifizierten Probe 26a) wurden 3 Firnisse 26b) bis 28b) hergestellt, wobei Firnis 26b) keinen Zusatz, Firnis 27b) zusätzlich Kristallzucker und 28b) zusätzlich Kristallzucker und Harnstoff enthielten.
Probe 29a) wurde unter Zusatz von Natriumtripolyphosphat zu einem blanken Firnis verarbeitet.
Tabelle IX zeigt die Zusammensetzung der Firnisse, ihre lösungs- und drucktechnischen Eigenschaften.

## Tabelle IX

| Firnis | 26b) | 27b) | 28b) | 29b) |
|---|---|---|---|---|
| Wasser/T | 290 | 379,5 | 379,5 | 278,5 |
| Ammoniak, 25 %ig/T | 60 | 60 | 60 | 34 |
| Ethanol | - | - | - | 37,5 |
| Harzpulver 26a)/T | 150 | 150 | 150 | 105 |
| Kristallzucker/T | - | 38,3 | 20 | - |
| Harnstoff/T | - | - | 18,3 | - |
| Natriumpolyphosphat/T | - | - | - | 45 |
| Viskosität/Ubbelohde/20°C/mPa.s | 6600 | 2280 | 1400 | 1100 |
| pH-Wert der blanken Firnisse | 9,8 | 9,9 | 9,6 | 8,2 |
| Verträglichkeit mit elektrolytfreiem Wasser | 1:0,5 | 1:0,8 | 1:0,8 | 1:2 |
| Trocknung 6-μm-Naßschicht auf PVC-Folie/s | 80 | 70 | 74 | 80 |
| Glanzsteigerung auf Erichsen-Prüfkarton nach LANGE/60°C in % | 9 | 10,2 | 11 | 9,8 |

Wie sich aus der Tabelle IX ergibt, wirken die Zusätze viskositätserniedrigend. Es ist somit möglich, Lösungen mit höherer Konzentration herzustellen, was sich vorteilhaft auf die Erzielung von Druckfarben mit höherem Glanz auswirkt.

III. Herstellung der Druckfarben

Aus den Firnissen 26b) bis 28b) wurden mit jeweils 90 Gew.-% Ruß, bezogen auf Festkörpergehalt, Schwarzfarben hergestellt, die auf Zeitungspapier als Naßschicht mittels eines Glasstabes aufgezogen, sofort trocken und haftfest sind, ohne auf der Papierrückseite durchzuschlagen.

Aus 67 T des Firnis 29b), 18 T Ruß und 15 T Wasser wurde eine Druckfarbe mit einer Kapillarviskosität von 530 mPa.s hergestellt. Nach 48 Stunden Lagerung trocknete ein 6-μm-Überzug der Farbe auf PVC-Folie in 75 s. Auf Zeitungspapier mit einem Glasstab aufgezogen, trat sofortige Trocknung ein ohne Durchschlagen der Farbe. Auch eine Farbschicht mit einer Naßschichtdicke von 36 μm zeigte kein Durchschlagen.

30 bis 33 - I. Herstellung der Naturharzsäure-Formaldehyd-Reaktionsprodukte

Die Beispiele 30a) bis 33a) gehen von demselben mit Zitronensäure modifizierten Reaktionsprodukt aus, wie es im Beispiel 26a) beschrieben ist.

II. Herstellung des wasserverdünnbaren Systems

Die nachstehenden Beispiele zeigen die Herstellung von Firnisssen bei Einsatz von möglichst geringen Mengen an Ammoniak.

In Tabelle X sind die Zusammensetzung der Firnisse sowie deren lösungs- und drucktechnische Eigenschaften zusammengefaßt.

14

## Tabelle X

| Firnis | 30b) | 31b) | 32b) | 33b) |
|---|---|---|---|---|
| Wasser/T | 290 | 290 | 290 | 290 |
| Ammoniak, 25 %ig/T | 50 | 40 | 30 | 25 |
| Harzpulver nach Bsp. 26a)/T | 150 | 150 | 150 | 150 |
| Nach Herstellung blank | + | + | + | + |
| Mit Wasser verdünnbar | ∞ | ∞ | ∞ | ∞ |
| Viskosität/mPa.s | 2960 | 1780 | 1320 | 1050 |
| pH-Wert | 8,8 | 8,6 | 8,6 | 8,0 |
| Trocknung 6-µm-Naßschicht/Folie/s | 75 | 75 | 75 | 70 |

| | 30b) | 31b) | 32b) | 33b) |
|---|---|---|---|---|
| Nach 24 h Lagerung | trüb | trüb | blank | blank |
| Geruch nach Ammoniak | ja | ja | ja | nein |
| Beliebig mit Wasser verdünnbar | + | + | + | + |

Auch wenn bei einzelnen Proben bei der Lagerung eine Trübung eintritt, so sind sie doch beliebig mit Wasser verdünnbar und somit für verschiedene praktische Verwendungszwecke geeignet.

### III. Herstellung der Druckfarben

Aus 18 T Ruß, 67 T der Probe 33b) und 15 T Wasser wurde eine Druckfarbe mit einer Kapillarviskosität von 430 mPa.s hergestellt. Auf PVC-Folie aufgezogen trocknet eine 6 µm-Naßschicht in 65 s und ist gut abriebfest. Eine auf Zeitungspapier mit dem Glasstab aufgezogene Schicht trocknete sofort ohne durchzuschlagen, auch eine 36 µm-Naßschicht schlug nicht durch.

Die Farbe aus Firnis 33b) zeigt somit trotz des niederen Ammoniakanteils ein drucktechnisch einwandfreies Verhalten.

### Einsatz von organischen Aminen

#### I. Herstellung des wasserverdünnbaren Systems:

35) 80 T nach Beispiel Ia) hergestelltes Kolophonium-Formaldehyd-Addukt wurden mit 16,6 T Dimethylethanolamin und 170 T entionisiertem Wasser so lange unter Rühren auf ca. 80° c erwärmt, bis eine Lösung entstanden war (ca. 1 Std.). Die blanke Lösung hatte einen Festkörpergehalt von 36,2 % und eine Viskosität von 550 mPa.s.

36) 80 T nach Beispiel 1a) hergestelltes Kolophonium-Formaldehyd-Addukt wurden mit 55,1 T Diisopropanolamin und 137 T entionisiertem Wasser so lange unter Rühren auf ca. 80° C erwärmt, bis eine blanke Lösung entstanden war (ca. 1 Std.), die folgende Eigenschaften besaß: 49,6 % Festkörper, 1400 mPa.s.

#### II. Herstellung der Dispergierfirnisse:

35a) Die unter Beispiel 35) hergestellte Firnislösung wurde durch Zusatz von 3 Gew.-% Ethanol und 31,4 Gew.-% Wasser (bezogen auf eingesetzte Firnislösung) auf eine Viskosität von 18 sec/DIN 53211-4 mm eingestellt. Der Festkörper dieses Firnisses betrug 25 % (gemessen bei 90° / 2,5 Std.).

36a) Die unter Beispiel 36) hergestellte Firnislösung wurde durch Zusatz von 3,6 Gew.-% Ethanol und 55,4 Gew.-% Wasser (bezogen auf eingesetzte Firnislösung) auf die Viskosität von 18 sec/DIN 53211-4 mm eingestellt. Der Festkörper dieses Firnisses betrug 23 % (gemessen bei 90°/2,5 Std.)

III. Herstellung der Druckfarben

35b) und 36b) 18,2 T Ruß und 43,6 T Dispergierfirnis (35a, 36a) (18 sec/DIN 53211-4 mm) wurden am Dissolver vordispergiert; nach Zugabe von 9,1 T Wasser, 0,1 T Entschäumer (RNopco 8034 der Fa. Münzing, Heilbronn) wurde 25 Minuten in einer Perlmühle dispergiert und anschließend noch jeweils 29,0 T der entsprechenden Dispergierfirnisse sorgfältig eingerührt. Es wurden je 100 T Farbe mit einer Viskosität von 18,5 sec/DIN 53211-4 mm (35b) und 15,6 sec/DIN 53211-4 mm (36b) erhalten.

Die Farben 35b) und 36b) wurden auf Zeitungspapier (55 g/m²) in Schichtdicken von 6,12 und 36 $\mu$m aufgezogen und zeigten jeweils einwandfreies Verhalten bezüglich Scheuerfestigkeit, Naßwischfestigkeit, Trocknung und Stand auf dem Papier.

**Ansprüche**

1. Druckfarbenbindemittelsystem auf der Grundlage eines Naturharzsäure-Formaldehyd-Reaktionsproduktes, dadurch gekennzeichnet, daß das Bindmittel in Form einer klaren, verdünnten, ammonikalischen oder aminhaltigen wäßrigen Lösung vorliegt, wobei das Bindemittel ein durch Umsetzung in mindestens einer Stufe erhaltenes Reaktionsprodukt aus einer Naturharzsäure und Formaldehyd ist, die Formaldehydmenge (100 %ig) bis 25 Gew.-% beträgt, bezogen auf die Naturharzsäure, und die Umsetzung in Abwesenheit oder in Gegenwart von 0,1 bis 2 Gew.-% eines Lewis-Katalysators unter atmosphärischem oder erhöhtem Druck vorgenommen worden ist.

2. Bindemittelsystem nach Anspruch 1, dadurch gekennzeichnet, daß das Naturharzsäure-Formaldehyd-Reaktionsprodukt mit einem Anteil von 4 bis 20, insbesondere 9 bis 18 Gew.-% Formaldehyd, bezogen auf die Naturharzsäure, hergestellt worden ist.

3. Bindemittelsystem nach Anspruch 1 oder 2, dadurch gekennzeichnet, daß das Reaktionsprodukt in 3 bis 7 %iger wäßriger Ammoniaklösung vorliegt.

4. Bindemittelsystem nach einem oder mehreren der Ansprüche 1 bis 3, dadurch gekennzeichnet, daß das Naturharzsäure-Formaldehyd-Reaktionsprodukt mit mindestens einer Polycarbonsäureeinheit der Gruppe (a) einer äthylenisch ungesättigten Dicarbonsäure und/oder deren Anhydrid und (b) einer Hydroxycarbonsäure teilverestert ist.

5. Bindemittelsystem nach Anspruch 4, dadurch gekennzeichnet, daß die Komponente (a) in einem Anteil von 3 bis 25, vorzugweise 5 bis 15 Gew.-%, und/oder die Komponente (b) in einem Anteil von 5 bis 30, vorzugsweise 10 bis 20 Gew.-%. jeweils bezogen auf das Naturharzsäure-Reaktionsprodukt, eingesetzt ist.

6. Bindemittelsystem nach einem oder mehreren der Ansprüche 1 bis 5, dadurch gekennzeichnet, daß es zusätzlich einen untergeordneten Anteil an ein- und/oder mehrwertigen Alkoholen als Co-Lösungsmittel enthält, bezogen auf die Gesamtlösung.

7. Bindemittelsystem nach Anspruch 6, dadurch gekennzeichnet, daß es bis zu 30 Gew.-% an ein- und/oder mehrwertigen Alkoholen als Co-Lösungsmittel enthält.

8. Bindemittelsystem nach einem oder mehreren der Ansprüche 1 bis 7, dadurch gekennzeichnet, daß das System zusätzlich Zucker und/oder Harnstoff und/oder Polyphosphat in einem Anteil bis zu 50, vorzugsweise bis zu 30 Gew.-%, bezogen auf den Gesamtfestkörpergehalt, enthält.

9. Bindemittelsystem nach einem oder mehreren der Ansprüche 1 bis 8, dadurch gekennzeichnet, daß das System einen pH-Wert von 7,5 bis 10, vorzugsweise 8 bis 10, aufweist.

10. Verwendung der Bindemittelsysteme nach einem oder mehreren der Ansprüche 1 bis 9 als Druckfirnis oder in Kombination mit Ruß oder Buntpigmenten und gegebenenfalls weiteren üblichen Zusätzen als

EP 0 222 229 B1

Druckfarbe.

11. Verwendung des Druckfirnis oder der Druckfarbe nach Anspruch 10 für den Flexodruck.

12. Verwendung des Druckfirnis nach Anspruch 10 für den Buch- und Offsetdruck.

13. Druckfirnis, enthaltend ein Bindemittelsystem nach einem oder mehreren der Ansprüche 1 bis 9.

14. Druckfarbe, enthaltend ein Bindemittelsystem nach einem oder mehreren der Ansprüche 1 bis 9 mit Ruß oder Buntpigmenten und gegebenenfalls weiteren üblichen Zusätzen.

**Patentansprüche für folgenden Vertragsstaat: AT**

1. Verfahren zur Herstelllung eines mit Wasser verdünnten Druckfarbenbindemittelsystems auf der Grundlage eines Naturharzsäure-Formaldehyd-Reaktionsproduktes, dadurch gekennzeichnet, daß das Bindemittel in Form einer klaren verdünnten, ammonikalischen oder aminhaltigen wäßrigen Lösung vorliegt, wobei das Bindemittel ein durch Umsetzung in mindestens einer Stufe erhaltenes Reaktionsprodukt aus einer Naturharzsäure und Formaldehyd darstellt und die zur Umsetzung eingesetzte Formaldehydmenge (100 %ig) 1 bis 25 Gew.-%, bezogen auf die Naturharzsäure, beträgt und die Umsetzung in Abwesenheit oder in Gegenwart von 0,1 bis 2 Gew.-% eines Lewis-Katalysators unter atmosphärischem oder erhöhtem Druck vorgenommen wird.

2. Verfahren nach Anspruch 1, dadurch gekennzeichnet, daß das Naturharzsäure-Formaldehyd-Reaktionsprodukt mit einem Anteil von 4 bis 20, insbesondere 9 bis 18 Gew.-% Formaldehyd, bezogen auf die Naturharzsäure, hergestellt wird.

3. Verfahren nach Anspruch 1 oder 2, dadurch gekennzeichnet, daß das Reaktionsprodukt in 3 bis 7 %iger wäßriger Ammoniallösung eingesetzt wird.

4. Verfahren nach einem oder mehreren der Ansprüche 1 bis 3, dadurch gekennzeichnet, daß das Naturharzsäure-Formaldehyd-Reaktionsprodukt mit mindestens einer Polycarbonsäureeinheit der Gruppe (a) einer äthylenisch ungesättigten Dicarbonsäure und/oder deren Anhydrid und (b) einer Hydroxycarbonsäure teilverestert wird.

5. Verfahren nach Anspruch 4, dadurch gekennzeichnet, daß für die Teilveresterung die Komponente (a) in einem Anteil von 3 bis 25, vorzugweise 5 bis 15 Gew.-%, und/oder die Komponente (b) in einem Anteil von 5 bis 30, vorzugsweise 10 bis 2.0 Gew.-%, jeweils bezogen auf das Naturharzsäure-Reaktionsprodukt, eingesetzt wird.

6. Verfahren nach einem oder mehreren der Ansprüche 1 bis 5, dadurch gekennzeichnet, daß man zusätzlich einen untergeordneten Anteil an ein- und/oder mehrwertigem Alkohol als Co-Lösungsmittel einsetzt, bezogen auf die Gesamtlösung.

7. Verfahren nach Anspruch 6, dadurch gekennzeichnet, daß man bis zu 30 Gew.-% an ein- oder mehrwertigem Alkohol als Co-Lösungsmittel einsetzt.

8. Verfahren nach einem oder mehreren der Ansprüche 1 bis 7, dadurch gekennzeichnet, daß man dem System zusätzlich Zucker und/oder Harnstoff und/oder Polyphosphat in einem Anteil bis zu 50, vorzugsweise bis zu 30 Gew.-%, bezogen auf den Gesamtfestkörpergehalt, zusetzt.

9. Verfahren nach einem oder mehreren der Ansprüche 1 bis 8, dadurch gekennzeichnet, daß das System einen pH-Wert von 7,5 bis 10, vorzugsweise 8 bis 10, aufweist.

10. Verwendung der Bindemittelsysteme, hergestellt nach einem oder mehreren der Ansprüche 1 bis 9, als Druckfirnis, oder in Kombination mit Ruß oder Buntpigmenten und gegebenenfalls weiteren üblichen Zusätzen als Druckfarbe.

11. Verwendung des Druckfirnis oder der Druckfarbe nach Anspruch 10 für den Flexodruck.

17

12. Verwendung des Druckfirnis nach Anspruch 10 für den Buch- und Offsetdruck.

**Patentansprüche für folgenden Vertragsstaat: ES**

1. Verfahren zur Herstellung eines mit Wasser verdünnten Druckfarbenbindemittelsystems auf der Grundlage eines Naturharzsäure-Formaldehyd-Reaktionsproduktes, dadurch gekennzeichnet, daß das Bindemittel in Form einer klaren verdünnten, ammonikalischen oder aminhaltigen wäßrigen Lösung vorliegt, wobei das Bindemittel ein durch Umsetzung in mindestens einer Stufe erhaltenes Reaktionsprodukt aus einer Naturharzsäure und Formaldehyd darstellt und die zur Umsetzung eingesetzte Formaldehydmenge (100 %ig) 1 bis 25 Gew.-%, bezogen auf die Naturharzsäure, beträgt und die Umsetzung in Abwesenheit oder in Gegenwart von 0,1 bis 2 Gew.-% eines Lewis-Katalysators unter atmosphärischem oder erhöhtem Druck vorgenommen wird.

2. Verfahren nach Anspruch 1, dadurch gekennzeichnet, daß das Naturharzsäure-Formaldehyd-Reaktionsprodukt mit einem Anteil von 4 bis 20, insbesondere 9 bis 18 Gew.-% Formaldehyd, bezogen auf die Naturharzsäure, hergestellt wird.

3. Verfahren nach Anspruch 1 oder 2, dadurch gekennzeichnet, daß das Reaktionprodukt in 3 bis 7 %iger wäßriger Ammoniaklösung eingesetzt wird.

4. Verfahren nach einem oder mehreren der Ansprüche 1 bis 3, dadurch gekennzeichnet, daß das Naturharzsäure-Formaldehyd-Reaktionsprodukt mit mindestens einer Polycarbonsäureeinheit der Gruppe (a) einer äthylenisch ungesättigten Dicarbonsäure und/oder deren Anhydrid und (b) einer Hydroxycarbonsäure teilverestert wird.

5. Verfahren nach Anspruch 4, dadurch gekennzeichnet, daß für die Teilveresterung die Komponente (a) in einem Anteil von 3 bis 25, vorzugweise 5 bis 15 Gew.-%, und/oder die Komponente (b) in einem Anteil von 5 bis 30, vorzugsweise 10 bis 20 Gew.-%, jeweils bezogen auf das Naturharzsäure-Reaktionsprodukt, eingesetzt wird.

6. Verfahren nach einem oder mehreren der Ansprüche 1 bis 5, dadurch gekennzeichnet, daß man zusätzlich einen untergeordneten Anteil an ein- und/oder mehrwertigem Alkohol als Co-Lösungsmittel einsetzt, bezogen auf die Gesamlösung.

7. Verfahren nach Anspruch 6, dadurch gekennzeichnet, daß man bis zu 30 Gew.-% an ein- oder mehrwertigem Alkohol als Co-Lösungsmittel einsetzt.

8. Verfahren nach einem oder mehreren der Ansprüche 1 bis 7, dadurch gekennzeichnet, daß man dem System zusätzlich Zucker und/oder Harnstoff und/oder Polyphosphat in einem Anteil bis zu 50, vorzugsweise bis zu 30 Gew.-%, bezogen auf den Gesamtfestkörpergehalt, zusetzt.

9. Verfahren nach einem oder mehreren der Ansprüche 1 bis 8, dadurch gekennzeichnet, daß das System einen pH-Wert von 7,5 bis 10, vorzugsweise 8 bis 10, aufweist.

10. Verwendung der Bindemittelsysteme, hergestellt nach einem oder mehreren der Ansprüche 1 bis 9, als Druckfirnis, oder in Kombination mit Ruß oder Buntpigmenten und gegebenenfalls weiteren üblichen Zusätzen als Druckfarbe.

11. Verwendung des Druckfirnis oder der Druckfarbe nach Anspruch 10 für den Flexodruck.

12. Verwendung des Druckfirnis nach Anspruch 10 für den Buch- und Offsetdruck.

**Claims**

1. Printing ink binder system based on a natural resin acid / formaldehyde reaction product, wherein the binder is present in the form of a clear, dilute, ammoniacal or amine-containing aqueous solution, the binder being a product obtained by reacting a natural resin acid and formaldehyde in at least one stage, the amount of (100% strength) formaldehyde being 1 to 25% by weight, based on the natural resin acid, and the reaction having been carried out under atmospheric or superatmospheric pressure in the absence or in the presence of 0.1 to 2% by weight of a Lewis catalyst.

2. The binder system as claimed in claim 1, wherein the natural resin acid/formaldehyde reaction product has been prepared with an amount of 4 to 20, in particular 9 to 18, % by weight of formaldehyde, based on the natural resin acid.

3. The binder system as claimed in claim 1 or 2, wherein the reaction product is present in 3 to 7% strength aqueous ammonia solution.

4. The binder system as claimed in one or more of claims 1 to 3, wherein the natural resin acid/formaldehyde reaction product has been partially esterified with at least one polycarboxylic acid unit of the group (a) an ethylenically unsaturated dicarboxylic acid and/or the anhydride thereof and (b) a hydroxycarboxylic acid.

5. The binder system as claimed in claim 4, wherein component (a) has been used in an amount of 3 to 25, preferably 5 to 15, % by weight, and/or component (b) in an amount of 5 to 30, preferably 10 to 20, % by weight, in each case based on the natural resin acid reaction product.

6. The binder system as claimed in one or more of claims 1 to 5, which additionally contains a minor amount of monohydric and/or polyhydric alcohols as co-solvents, based on the total solution.

7. The binder system as claimed in claim 6, which contains up to 30% by weight of monohydric and/or polyhydric alcohols as co-solvents.

8. The binder system as claimed in one or more of claims 1 to 7, which additionally contains sugar and/or urea and/or polyphosphate in an amount of up to 50, preferably up to 30, % by weight, based on the total solids content.

9. The binder system as claimed in one or more of claims 1 to 8, which has a pH value of 7.5 to 10, preferably 8 to 10.

10. Use of the binder system as claimed in one or more of claims 1 to 9, as a printing varnish or in combination with carbon black or colored pigments and if desired further customary additives as a printing ink.

11. Use of the printing varnish or of the printing ink as claimed in claim 10, for flexographic printing.

12. Use of the printing varnish as claimed in claim 10, for letterpress and offset printing.

13. A printing varnish which contains a binder system as claimed in one or more of claims 1 to 9.

14. A printing ink which contains a binder system as claimed in one or more of claims 1 to 9, together with carbon black or colored pigments and if desired further customary additives.

**Claims for the following Contracting States: AT,ES**

1. Process for preparing a water-diluted printing ink binder system based on a natural resin acid/formaldehyde reaction product, wherein the binder is present in the form of a clear, dilute, ammoniacal or amine-containng aqueous solution, the binder representing a product obtained by reacting a natural resin acid and formaldehyde in at least one stage and the amount of (100 % strength) formaldehyde used for the reaction being 1 to 25 % by weight, based on the natural resin acid, and the reaction being carried out under atmospheric or superatmospheric pressure in the absence or in the presence of 0.1 to 2 % by weight of a Lewis catalyst.

2. The process as claimed in claim 1, wherein the natural resin acid/formaldehyde reaction product is prepared with an amount of 4 to 20, in particular 9 to 18, % by weight of formaldehyde, based on the natural resin acid.

3. The process as claimed in claim 1 or 2, wherein the reaction product is used in 3 to 7 % strength aqueous ammonia solution.

4. The process as claimed in one or more of claims 1 to 3, wherein the natural resin acid/formaldehyde reaction product is partially esterified with at least one polycarboxylic acid unit of the group (a) an ethylenically unsaturated dicarboxylic acid and/or the anhydride thereof and (b) a hydroxycarboxylic acid.

5. The process as claimed in claim 4, wherein, for the partial esterification, component (a) is used in an amount Of 3 to 25, preferably 5 to 15, % by weight, and/or component (b) in an amount of 5 to 30, preferably 10 to 20, % by weight, in each case based on the natural resin acid reaction product.

6. The process as claimed in one or more of claims 1 to 5, wherein a minor amount of monohydric and/or polyhydric alcohols are additionally used as co-solvents, based on the total solution.

7. The process as claimed in claim 6, wherein up to 30 % by weight of a monohydric or polyhydric alcohol is used as a co-solvent.

8. The process as claimed in one or more of claims 1 to 7, wherein sugar and/or urea and/or polyphosphate are additionally used in the system, in an amount of up to 50, preferably up to 30, % by weight, based on the total solids content.

9. The process as claimed in one or more of claims 1 to 8, wherein the system has a pH value of 7.5 to 10, preferably 8 to 10.

10. Use of the binder system prepared as claimed in one or more of claims 1 to 9, as a printing varnish or in combination with carbon black or colored pigments and if desired further customary additives as a printing ink.

11. Use of the printing varnish or of the printing ink as claimed in claim 10, for flexographic printing.

12. Use of the printing varnish as claimed in claim 10, for letterpress and offest printing.

**Revendications**

1. Système liant pour encre d'imprimerie à base d'un produit de la réaction d'un acide dérivé d'une résine naturelle et du formaldéhyde, caractérisé en ce que le liant se présente sous la forme d'une solution aqueuse limpide, diluée, ammoniacale ou aminée, le liant étant un produit, obtenu par réaction en au moins une étape, de la réaction d'un acide dérivé d'une résine naturelle et de formaldéhyde, la quantité de formaldéhyde à 100 % allant jusqu'à 25 % en poids par rapport à l'acide dérivé de la résine naturelle, la réaction ayant été mise en oeuvre en l'absence ou en présence de 0,1 à 2 % en poids d'un catalyseur de Lewis sous la pression atmosphérique ou sous une pression plus élevée.

2. Système liant selon la revendication 1, caractérisé en ce que le produit de la réaction d'un acide dérivé d'une résine naturelle et du formaldéhyde a été préparé avec 4 à 20, en particulier 9 à 18 % en poids de formaldéhyde par rapport à l'acide dérivé de la résine naturelle.

3. Système liant selon la revendication 1 ou 2, caractérisé en ce que le produit de réaction est présent en solution ammoniacale aqueuse à 3 à 7 %.

4. Système liant selon l'une ou plusieurs des revendications 1 à 3, caractérisé en ce que le produit de la réaction d'un acide dérivé d'une résine naturelle et du formaldéhyde subit une estérification partielle avec au moins un motif acide polycarboxylique (a) d'un acide dicarboxylique à insaturation éthylénique et/ou son anhydride et (b) d'un acide hydroxycarboxylique.

5. Système liant selon la revendication 4, caractérisé en ce que le composant (a) est utilisé en une quantité de 3 à 25, de préférence 5 à 15 % en poids, et/ou le composant (b) en une quantité de 5 à 30, de préférence 10 à 20 % en poids, dans chaque cas par rapport au produit de la réaction de l'acide

20

dérivé d'une résine naturelle.

6. Système liant selon l'une ou plusieurs des revendications 1 à 5, caractérisé en ce qu'il contient en outre une quantité mineure, par rapport à la solution totale, de mono- et/ou polyalcools servant de cosolvants.

7. Système liant selon la revendication 6, caractérisé en ce qu'il contient jusqu'à 30 % en poids de mono- et/ou polyalcools en tant que cosolvants.

8. Système liant selon l'une ou plusieurs des revendications 1 à 7, caractérisé en ce que le système contient en outre du sucre et/ou de l'urée et/ou un polyphosphate en une quantité allant jusqu'à 50, de préférence jusqu'à 30 % en poids par rapport à l'extrait sec total.

9. Système liant selon l'une ou plusieurs des revendications 1 à 8, caractérisé en ce que le système a un pH de 7,5 à 10, de préférence de 8 à 10.

10. Utilisation des systèmes de liant selon l'une ou plusieurs des revendications 1 à 9 en tant que vernis d'imprimerie ou en combinaison avec du noir de carbone ou des pigments colorés et éventuellement d'autres additifs usuels, en tant qu'encre d'imprimerie.

11. Utilisation du vernis d'imprimerie ou de l'encre d'imprimerie selon la revendication 10 en flexographie.

12. Utilisation du vernis d'imprimerie selon la revendication 10 en typographie et impression offset.

13. Vernis d'imprimerie contenant un système liant selon l'une ou plusieurs des revendications 1 à 9.

14. Encre d'imprimerie contenant un système liant selon l'une ou plusieurs des revendications 1 à 9 avec du noir de carbone ou des pigments colorés et éventuellement d'autres additifs usuels.

## Revendications pour les Etats contractants suivants: AT, ES

1. Procédé de préparation d'un système liant pour encre d'imprimerie dilué à l'eau, à base d'un produit de la réaction d'un acide dérivé d'une résine naturelle et du formaldéhyde, caractérisé en ce que le liant se présente sous la forme d'une solution aqueuse limpide, diluée, ammoniacale ou aminée, le liant étant un produit, obtenu par réaction en au moins une étape, de la réaction d'un acide dérivé d'une résine naturelle et de formaldéhyde, et la quantité utilisée pour la réaction de formaldéhyde à 100% allant de 1 jusqu'à 25% en poids par rapport à l'acide dérivé de la résine naturelle, la réaction ayant été mise en oeuvre en l'absence ou en présence de 0,1 à 2 % en poids d'un catalyseur de Lewis sous la pression atmosphérique ou sous une pression plus élevée.

2. Procédé selon la revendication 1, caractérisé en ce que le produit de la réaction d'un acide dérivé d'une résine naturelle et du formaldéhyde est préparé avec 4 à 20, en particulier 9 à 18 % en poids de formaldéhyde par rapport à l'acide dérivé de la résine naturelle.

3. Procédé selon la revendication 1 ou 2, caractérisé en ce que le produit de réaction est utilisé en solution - ammoniacale aqueuse à 3 à 7 %.

4. Procédé selon l'une ou plusieurs des revendications 1 à 3, caractérisé en ce que le produit de la réaction d'un acide dérivé d'une résine naturelle et du formaldéhyde subit une estérification partielle avec au moins un motif acide polycarboxylique (a) d'un acide dicarboxylique à insaturation éthylénique et/ou son anhydride et (b) d'un acide hydroxycarboxylique.

5. Procédé selon la revendication 4, caractérisé en ce que pour l'estérification partielle, le composant (a) est utilisé en une quantité de 3 à 25, de préférence 5 à 15 % en poids, et/ou le composant (b) en une quantité de 5 à 30, de préférence 10 à 20 % en poids, dans chaque cas par rapport au produit de la réaction de l'acide dérivé d'une résine naturelle.

6. Procédé selon l'une ou plusieurs des revendications 1 à 5, caractérisé en ce qu on utilise en outre une quantité mineure, par rapport à la solution totale, de mono-et/ou polyalcools servant de cosolvants.

7.  Procédé selon la revendication 6, caractérisé en ce qu' on utilise jusqu'à 30 % en poids de mono- ou polyalcool en tant que cosolvant.

8.  Procédé selon l'une ou plusieurs des revendications 1 à 7, caractérisé en ce qu'on ajoute au système en outre du sucre et/ou de l'urée et/ou un polyphosphate en une quantité allant jusqu'à 50, de préférence jusqu'à 30 % en poids par rapport à l'extrait sec total.

9.  Procédé selon l'une ou plusieurs des revendications 1 à 8, caractérisé en ce que le système a un pH de 7,5 à 10, de préférence de 8 à 10.

10. Utilisation des systèmes de liant preparés selon l'une ou plusieurs des revendications 1 à 9 en tant que vernis d'imprimerie ou en combinaison avec du noir de carbone ou des pigments colorés et éventuellement d'autres additifs usuels, en tant qu'encre d'imprimerie.

11. Utilisation du vernis d'imprimerie ou de l'encre d'imprimerie selon la revendication 10 en flexographie.

12. Utilisation du vernis d'imprimerie selon la revendication 10 en typographie et impression offset.